(19) Europäisches Patentamt
European Patent Office
Office européen des brevets

(11) Veröffentlichungsnummer: **0 104 528**
**B1**

# (12) EUROPÄISCHE PATENTSCHRIFT

(45) Veröffentlichungstag der Patentschrift: **13.11.85**

(51) Int. Cl.⁴: **C 07 F 9/22,** D 21 H 3/02

(21) Anmeldenummer: **83108978.4**

(22) Anmeldetag: **12.09.83**

(54) **Reaktivleimungsmittel für Papier.**

(30) Priorität: **25.09.82 DE 3235611**

(43) Veröffentlichungstag der Anmeldung:
**04.04.84 Patentblatt 84/14**

(45) Bekanntmachung des Hinweises auf die Patenterteilung:
**13.11.85 Patentblatt 85/46**

(84) Benannte Vertragsstaaten:
**CH DE FR GB IT LI NL**

(56) Entgegenhaltungen:
**DE - A - 1 546 334**
**DE - A - 2 227 948**
**DE - B - 1 005 963**
**DE - B - 1 276 854**
**FR - A - 1 175 550**
**GB - A - 885 370**
**GB - A - 1 164 182**
**US - A - 2 151 380**

(73) Patentinhaber: **BAYER AG, Konzernverwaltung RP Patentabteilung, D-5090 Leverkusen 1 Bayerwerk (DE)**

(72) Erfinder: **Kolb, Günter, Dr., Verstorben (DE)**
Erfinder: **Sackmann, Günter, Dr., Friedenberger Strasse 11, D-5090 Leverkusen 3 (DE)**
Erfinder: **Beck, Ulrich, Dr., Weiherstrasse 17, D-5303 Bornheim 3 (DE)**
Erfinder: **Bäumgen, Heinz, Buchenweg 10, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 104 528 B1

**Beschreibung**

Die Leimung von Papier mit synthetischen oder natürlichen Leimungsmitteln kann nach zwei unterschiedlichen Wirkungsmechanismen eintreten, je nachdem, welcher Typ von Leimungsmittel zum Einsatz gelangt. Werden nicht-reaktive Leimungsmittel, wie Harzleim, Paraffin oder bestimmte synthetische Hochpolymere verwendet, dann wird die Leimung durch eine ionische Fixierung der Produkte auf den Cellulosefasern bewirkt. Beim Einsatz von Reaktivleimungsmitteln wird die Leimung über kovalente Bindungen zwischen Leimungsmittel und Zellstoff bewirkt. Als Reaktivleimungsmittel bezeichnet man hydrophobe Substanzen mit solchen funktionellen Gruppen, die zur chemischen Reaktion mit den OH- oder COOH-Gruppen befähigt sind. Als Beispiele für Reaktivleimungsmittel seien Stearoyldiketen, Tetrapropenylbernsteinsäureanhydrid, Stearylisocyanat, Dehydroabietylisocyanat, Epoxide und Derivate von Cyanurchlorid genannt.

Die Reaktivleimungsmittel besitzen gegenüber den nichtreaktiven Leimungsmitteln den Vorteil, daß sie eine größere Effektivität besitzen, da sie fest an die Fasern gebunden sind. Dadurch sind die zur Erzielung einer guten Leimungswirkung benötigten Leimungsmittelmengen wesentlich niedriger als bei der Verwendung nicht-reaktiver Leimungsmittel.

Als Reaktivleimungsmittel haben sich am Markt vor allem solche Handelsprodukte durchgesetzt, die Stearoyldiketen als Wirksubstanz enthalten. Diese Produkte zeigen in Form von wäßrigen Suspensionen oder Lösungen in organischen Lösungsmitteln, besonders auf im neutralen oder schwach alkalischen Medium hergestellten Papieren, gute bis sehr gute Leimungseigenschaften. Unter neutral oder schwach alkalisch hergestellten Papieren versteht man gewöhnlich solche Papiere, die mit $CaCO_3$ als Füllstoff und ohne den Zusatz von Aluminiumsulfat hergestellt werden. Nachteilig bei Leimungsmitteln auf Stearoyldiketen-Basis ist jedoch, daß diese auf Papieren, die nicht mit Kreide, sondern mit Kaolin als Füllstoff hergestellt werden, nur eine sehr geringe oder überhaupt keine Leimungswirkung zeigen.

Aufgabe der Erfindung war es, Leimungsmittel bereitzustellen, die universell einsetzbar sind, d. h. sowohl auf neutralen bis alkalischen als auch auf sauren Papieren sowie auf Papieren, die Kreide oder Kaolin als Füllstoff enthalten.

Es wurde nun gefunden, daß Verbindungen der Formel

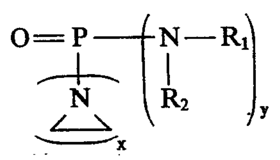

(I)

worin

$R_1$ = Kohlenwasserstoffrest mit 12 bis 24 C-Atomen,
$R_2$ = Wasserstoff oder $R_1$,
x und y = jeweils 1 oder 2 bedeuten, wobei die Summe aus x und y stets 3 ist,

sehr gut zur Leimung von Papier (sowohl Oberflächenleimung als auch Masseleimung) geeignet sind und sowohl auf neutralen bis alkalischen als auch auf sauren Papieren sowie auf Papieren, die Kreide oder Kaolin als Füllstoff enthalten, einsetzbar sind.

Insbesondere geeignet sind Verbindungen der Formel (I), wobei

$R_1$ = Stearyl oder Dehydroabietyl,
$R_2$ = Wasserstoff,
x = 2 und
y = 1 sind.

Die bevorzugten Verbindungen besitzen folgende Struktur:

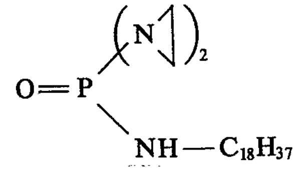

(II)

und

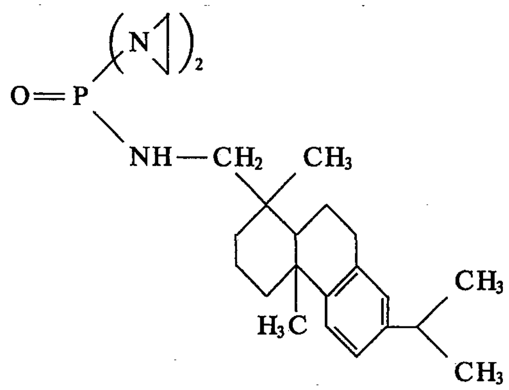

(III)

Die Leimungsmittel sind, wie oben erwähnt, sowohl zur Oberflächen- als auch zur Masseleimung geeignet.

Dazu können die genannten Phosphorsäuretriamidverbindungen in Form von Lösungen z. B. in organischen Lösungsmitteln oder in Form von wäßrigen Zubereitungen, etwa in Form von Suspensionen oder Emulsionen, Verwendung finden. Als Suspendierhilfsmittel sind z. B. Polyvinylalkohol oder wasserlösliche Cellulosederivate, insbesondere kationische Stärke gut geeignet, gegebenenfalls in Kombination mit vorzugsweise nicht-ionischen Emulgatoren.

Die Kohlenwasserstoffreste können geradkettig oder verzweigt, gesättigt oder teilweise ungesättigt sein oder auch gesättigte, ungesättigte oder aromatische Ringstrukturen enthalten.

Die Phosphorsäuretriamidverbindungen werden durch Umsetzung von Phosphoroxychlorid, mit Azidirin und Aminen mit einem oder zwei $C_{12}-C_{24}$-Kohlenwasserstoffresten erhalten.

Als Beispiele für Amine seien Dodecylamin, Hexadecylamin, Stearylamin oder Gemische davon genannt. Neben linearen oder verzweigten aliphatischen Aminen können aber auch mehrkernig cyclische Monoamine zum Einsatz kommen. Vertreter dieser Gruppe sind Abietylamin und Dehydroabietylamin.

Bevorzugte Amine sind Stearylamin und Dehydroabietylamin. Vorzugsweise enthalten die Phosphorsäuretriamide 2 Aziridingruppen.

Die Verbindungen der Formel (I) werden im allgemeinen hergestellt durch Umsetzung von einem Mol Phosphoroxychlorid mit x Mol Aziridin und y Mol einer Verbindung der Formel

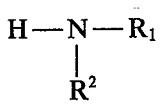

Die Umsetzung erfolgt im inerten Lösungsmittel (vorzugsweise wasserfreies Toluol) und bei niedriger Temperatur (vorzugsweise 10 bis 50° C, insbesondere 20 bis 25° C).

## Beispiel 1

In einem 1-l-Vierhalskolben mit Rührer, Rückflußkühler und Tropftrichter werden 200 ml wasserfreies Toluol und 30,7 g Phosphoroxychlorid vorgelegt.

Zu dieser Lösung tropft man innerhalb 1 Std. ein Gemisch aus 300 ml wasserfreiem Toluol, 53,8 g Stearylamin, 17,2 g Aziridin und 60,6 g trockenem Triethylamin. Durch Kühlung mit einem Eisbad wird die Reaktionstemperatur bei 20—25°C gehalten. Nach beendeter Zugabe wird noch 5 Stdn. bei 20—25° C nachgerührt. Der kristalline Niederschlag wird abfiltriert, und vom Filtrat wird das Lösungsmittel mit einem Rotationsverdampfer abdestilliert. Zurück bleibt ein schwach gelb gefärbtes wachsartiges Produkt.

Ausbeute: 49 g = 61,5% d. Th.

## Beispiel 2

In einem 1-l-Vierhalskolben mit Rührer, Rückflußkühler und Tropftrichter werden 200 ml wasserfreies Toluol und 30,7 g Phosphoroxychlorid vorgelegt.

Zu dieser Lösung werden innerhalb von 45 Min. eine Mischung aus 57,2 g Dehydroabietylamin, 17,2 g Aziridin, 60,6 g trockenem Triethylamin und 300 ml wasserfreiem Toluol zugetropft. Dabei wird die Temperatur des Reaktionsgemisches durch Kühlen bei 20—25° C gehalten. Nach beendeter Zugabe wird noch 18 Stunden bei 20—25°C nachgerührt. Der entstandene kristalline Niederschlag wird

abgesaugt, und vom Filtrat wird das Toluol im Vakuum abdestilliert. Dabei bleibt ein wachsartiges Produkt zurück, welches bei 74° C zu schmelzen beginnt.

Ausbeute: 74 g = 89,1% der Theorie.

## Beispiel 3

Um die Leimungseigenschaften des nach Beispiel 1 hergestellten Phosphorsäuretriamids möglichst störungsfrei zu ermitteln, wird der unten beschriebene Test mit verschiedenen Papiersorten durchgeführt. Die eingesetzten Papiere hatten folgende Zusammensetzung:

| | | | |
|---|---|---|---|
| A) | neutral: | 50 Gew.-Teile | Nadelholzsulfat |
| | | 50 Gew.-Teile | Birkensulfat |
| | | 10 Gew.-Teile | Kreide |
| B) | neutral: | 50 Gew.-Teile | Nadelholzsulfat |
| | | 50 Gew.-Teile | Birkensulfat |
| | | 10 Gew.-Teile | Kaolin |
| C) | sauer: | 50 Gew.-Teile | Nadelholzsulfat |
| | | 50 Gew.-Teile | Birkensulfat |
| | | 12 Gew.-Teile | Kaolin |
| | | 1,5 Gew.-Teile | Alaun |

Diese Papiere wurden auf einem Foulard-Gerät mit den zu prüfenden Leimungsmitteln, 0,1- bzw. 0,2gew.-%ig gelöst in Toluol, ausgerüstet und abgequetscht. Danach wurden sie den Nachbehandlungen I—IV unterzogen:

| | Art der Nachbehandlung | Zu untersuchender Effekt |
|---|---|---|
| I | 5 Min. bei 150° C | Wirkung des ausreagierten Leimungsmittels |
| II | 1 Min. bei 90° C | Anspringen der Reaktion des reinen Wirkstoffs bei praxisüblichen Temperaturen < 120° C |
| III | 5 Min. bei 90° C zwischen 2 nassen Filterpapieren | Einfluß der Feuchtigkeit |
| IV | luftgetrocknet bei 20° C | ev. Leimung ohne chemische Reaktion |

Die geleimten und nach I—IV nachbehandelten Papiere werden in Streifen von 3 cm Breite und 9 cm Länge geschnitten und auf blaue Prüftinte gelegt. Nach 1 Minute Auflage werden die Probepapiere von der Tinte genommen, rückseitig auf Löschpapier abgequetscht und nach 5 Min. beurteilt. Zur qualitativen Beurteilung der Durchdringung der Tinte durch das Papier und damit des Leimungsgrades wird eine Bewertung mit den Zahlen 1—5 durchgeführt, wobei die Zahlen im einzelnen bedeuten:

1: kein Tintendurchschlag,
2: 5—10% Tintendurchschlag,
3: 10—20% Tintendurchschlag,
4: ca. 50% Tintendurchschlag,
4,5: ca. 90% Tintendurchschlag,
5: 100% Tintendurchschlag.

Die folgende Tabelle gibt die Bewertung der Leimungswirkung des erfindungsgemäßen Leimungsmittels auf den Papieren A, B und C wieder. Als Vergleich wurde das als Wirksubstanz in vielen handelsüblichen Leimungsmitteln eingesetzte Stearoyldiketen verwendet.

Versuchsergebnisse

1. Papiersorte A (kreidehaltig, neutral)

| Leimungsmittel | Feststoff i. Toluol | Bewertung d. Leimung bei Nachbehandlung I | II | III | IV | Ø der Bewertung |
|---|---|---|---|---|---|---|
| Phosphorsäuretriamid nach Beispiel 1 | 0,1% | 1 | 1 | 1,5 | 1 | 1,1 |
| Stearoyldiketen | 0,1% | 1 | 4,5 | 2 | 5 | 3,1 |

2. Papiersorte B (kaolinhaltig, neutral)

| Leimungsmittel | Feststoff i. Toluol | Bewertung d. Leimung bei Nachbehandlung I | II | III | IV | Ø der Bewertung |
|---|---|---|---|---|---|---|
| Phosphorsäuretriamid nach Beispiel 1 | 0,2% | 1 | 1 | 1 | 1 | 1,0 |
| Stearoyldiketen | 0,2% | 2 | 5 | 5 | 5 | 4,3 |

3. Papiersorte C (kreidehaltig, sauer)

| Leimungsmittel | Feststoff i. Toluol | Bewertung d. Leimung bei Nachbehandlung I | II | III | IV | Ø der Bewertung |
|---|---|---|---|---|---|---|
| Phosphorsäuretriamid nach Beispiel 1 | 0,2% | 1 | 1 | 1 | 1 | 1,0 |
| Stearoyldiketen | 0,2% | 4,5 | 5 | 5 | 5 | 4,9 |

Die Versuchsergebnisse machen ganz deutlich, daß das erfindungsgemäße Leimungsmittel dem Stearoyldiketen auf allen untersuchten Papiersorten klar überlegen ist. Der Unterschied zwischen diesen beiden Produkten zeigt sich besonders auf kaolinhaltigem Papier, wo das Stearoyldiketen nur in der ausreagierten Form (I) — aber auch hier lediglich auf kaolinhaltigem, neutralem Papier — eine gute Leimung zeigt. Besonders stark manifestiert sich der durch das Leimungsmittel auf Basis des speziellen Phosphorsäureamids erzielbare technische Fortschritt bei Papieren, die das in der Praxis der Papierherstellung oft verwendete Aluminiumsulfat enthalten (Papiersorte C). Während die mit dem Stearoyldiketen behandelten Proben hier bei fast allen Arten der Nachbehandlung nach der Prüfzeit eine vollständige Tintendurchdringung zeigen, ist bei den mit dem erfindungsgemäßen Leimungsmittel behandelten Proben absolut keine Tintendurchdringung festzustellen.

Entsprechende Ergebnisse werden erzielt, wenn ein Leimungsmittel verwendet wird, dessen Wirksubstanz anstelle des Stearylrestes den Dehydroabietylrest enthält (s. Beispiel 2).

**Patentansprüche**

1. Phosphorsäuretriamidverbindungen der Formel

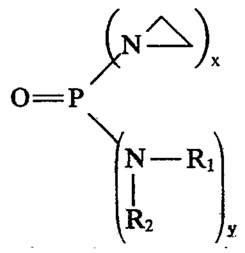

(I)

wobei

$R_1$ einen Kohlenwasserstoffrest mit 12 bis 24 C-Atomen,
$R_2$ Wasserstoff oder $R_1$ und
x und y jeweils 1 oder 2 bedeuten und wobei die Summe aus x und y stets 3 ist.

2. Verbindungen der Formel I gemäß Anspruch 1, wobei

$R_1$ = Stearyl oder Dehydroabietyl,
$R_2$ = Wasserstoff,
x = 2 und
y = 1.

3. Verfahren zur Herstellung von Verbindungen der Formel

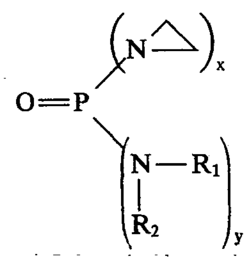

(I)

wobei

$R_1$ einen Kohlenwasserstoffrest mit 12 bis 24 C-Atomen,
$R_2$ Wasserstoff oder $R_1$ und
x und y jeweils 1 oder 2 bedeuten und wobei die Summe aus x und y stets 3 ist,

dadurch gekennzeichnet, daß man 1 Mol Phosphoroxychlorid mit x Mol Aziridin und y Mol einer Verbindung der Formel

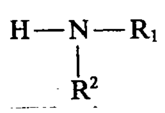

in einem inerten Lösungsmittel umsetzt.

4. Reaktivleimungsmittel für Papier, dadurch gekennzeichnet, daß sie als Wirkstoff eine Verbindung gemäß Anspruch 1, enthalten.

5. Reaktivleimungsmittel für Papier, dadurch gekennzeichnet, daß sie als Wirkstoff eine Verbindung gemäß Anspruch 2, enthalten.

6. Verfahren zur Leimung von Papier mit Reaktivleimungsmitteln, dadurch gekennzeichnet, daß das Leimungsmittel als Wirksubstanz eine Verbindung der Formel

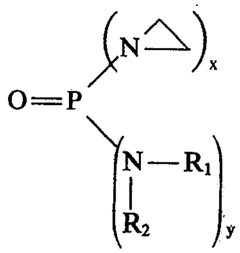

enthält, wobei

$R_1$ einen Kohlenwasserstoffrest mit 12 bis 24 C-Atomen
$R_2$ Wasserstoff oder $R_1$ und
x und y jeweils 1 oder 2 bedeuten, wobei die Summe aus x und y stets 3 ist.

7. Verfahren nach Anspruch 6, wobei $R_2$ Wasserstoff und $R_1$ Stearyl oder Dehydroabietyl, x 2 und y 1 bedeuten.

**Claims**

1. Phosphoric traimide compounds of the formula

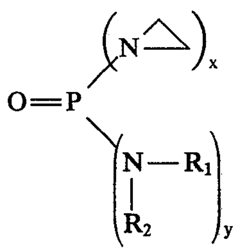

(I)

wherein

$R_1$ denotes a hydrocarbon radical with 12 to 24 C atoms,
$R_2$ denotes hydrogen or $R_1$ and
x and y each denote 1 or 2 and wherein the sum of x and y is always 3.

2. Compounds of the formula I according to Claim 1, wherein

$R_1$ = stearyl or dehydroabietyl,
$R_2$ = hydrogen,
x = 2 and
y = 1.

3. Process for the preparation of compounds of the formula

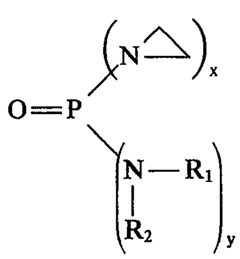

(I)

wherein

$R_1$ denotes a hydrocarbon radical with 12 to 24 C atoms,
$R_2$ denotes hydrogen or $R_1$ and
x and y each denote 1 or 2 and wherein the sum of x and y is always 3,

characterised in that 1 mol of phosphorus oxychloride is reacted with x mol of aziridine and y mol of a compound of the formula

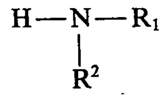

in an inert solvent.

4. Reactive sizing agents for paper, characterised in that they contain a compound according to Claim 1 as the active compound.

5. Reactive sizing agents for paper, characterised in that they contain a compound according to Claim 2 as the active compound.

6. Process for sizing paper with reactive sizing agents, characterised in that the sizing agent contains as the active substance a compound of the formula

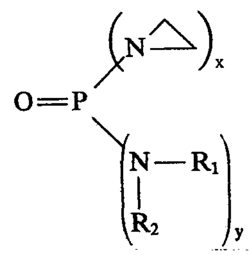

wherein

$R_1$ denotes a hydrocarbon radical with 12 to 24 C atoms,
$R_2$ denotes hydrogen or $R_1$ and
x and y each denote 1 or 2, the sum of x and y always being 3.

7. Process according to Claim 6, wherein $R_2$ denotes hydrogen and $R_1$ denotes stearyl or dehydroabietyl, x denotes 2 and y denotes 1.

## Revendications

1. Triamides d'acide phosphorique de formule

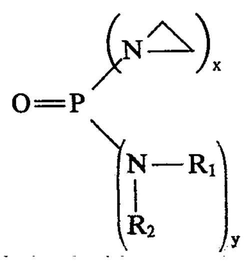

(I)

dans laquelle:

$R_1$ est un reste d'hydrocarbure ayant 12 à 24 atomes de carbone,
$R_2$ est un atome d'hydrogène ou bien $R_1$ et
x et y représentent chacun 1 ou 2 et la somme de x et y est égale à 3.

2. Composés de formule I selon la revendication 1, dans lesquels:

$R_1$ = stéaryle ou déshydroabiétyle,
$R_2$ = hydrogène,
x = 2 et
y = 1.

3. Procédé pour la fabrication de composés de formule

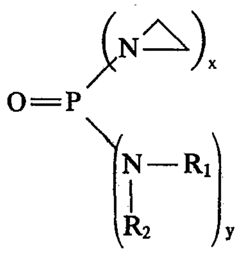

(I)

dans laquelle:

$R_1$ est un reste d'hydrocarbure ayant 12 à 24 atomes de carbone,
$R_2$ est l'hydrogène ou $R_1$ et
x et y représentent chacun 1 ou 2 et la somme de x et y est toujours égale à 3,

caractérisé en ce que l'on fait réagir 1 mole d'oxychlorure de phosphore avec x moles d'aziridine et y moles d'un composé de formule

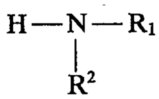

dans un solvant inerte.

4. Colles réactives pour le papier, caractérisées en ce qu'elles contiennent comme ingrédient actif un composé selon la revendication 1.

5. Colles réactives pour le papier, caractérisées en ce qu'elles contiennent comme ingrédient actif un composé selon la revendication 2.

6. Procédé pour le collage du papier avec des colles réactives, caractérisé en ce que la colle contient comme substance active un composé de formule

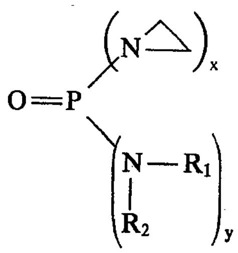

dans laquelle:

$R_1$ est un reste d'hydrocarbure ayant 12 à 24 atomes de carbone,
$R_2$ est l'hydrogène ou $R_1$ et
x et y sont chacun 1 ou 2 et la somme de x et y étant toujours égale à 3.

7. Procédé selon la revendication 6, caractérisé en ce que $R_2$ est l'hydrogène et $R_1$ est stéaryle ou déshydoabiétyle, x est égal à 2 et y est égal à 1.